# EUROPEAN PATENT APPLICATION

(11) **EP 4 554 240 A1**
(43) Date of publication of application: **14.05.2025**
(21) Application number: 23834608.4
(22) Date of filing: 14.06.2023
(51) Int. Cl.: H04N 21/485

(54) **VIDEO PLAYING METHOD AND APPARATUS, AND DEVICE AND STORAGE MEDIUM**

(30) Priority: 07.07.2022 CN 202210804300
(71) Applicant: Beijing Zitiao Network Technology Co., Ltd., Beijing 100190 (CN)
(72) Inventor: CHEN, Shiyun, Beijing 100028 (CN); WANG, Yiming, Beijing 100028 (CN); XIANG, Wangtao, Beijing 100028 (CN); ZHANG, Fan, Beijing 100028 (CN); XIE, Zhiyang, Beijing 100028 (CN)
(74) Representative: Dentons UK and Middle East LLP
(86) International application number: PCT/CN2023/100182
(87) International publication number: WO 2024/007834

(57) **Abstract**

A video playing method and apparatus, and a device and a storage medium. The method comprises: playing the first video, wherein first background music in the first video is similar music that matches reference music in a preset music dimension; and in response to a first switching operation triggered for the first video, switching the first video to a second video, and playing the second video, wherein second background music in the second video is similar music that matches the reference music in the preset music dimension and is different from the first background music.

## Description

The present application claims priority to Chinese Patent Application No. 202210804300.X filed on July 7, 2022 by the Chinese Patent Office, the entire contents of which are incorporated herein by reference.

### TECHNICAL FIELD

The embodiment of the present disclosure relates to computer technology, such as a video playing method, an apparatus, a device and a storage medium.

### BACKGROUND

With the rapid development of mobile Internet, more and more users prefer to watch videos on video platforms. Tens of millions of videos are authored and disseminated every day on a video platform. Often, there will be background music to the video to improve the attractiveness and user viewing experience of the video. In the prior art, when a user is interested in a music, the user is required to manually search for videos related to the music, degrading the user experience.

### SUMMARY

The present disclosure provides a video playing method, apparatus, device and storage medium to quickly play a video with similar background music, without manual search, enhancing interactivity with users, and improving user viewing experience.

The embodiment of the disclosure provides a video playing method, including:
playing a first video, wherein first background music in the first video is similar music matching with reference music in a preset music dimension;
in response to a first switching operation triggered on the first video, switching the first video to a second video, and playing the second video, wherein second background music in the second video is similar music that matches the reference music in a preset music dimension and is different from the first background music.

The embodiment of the present disclosure also provides a video playing apparatus, including:
a first video playing module, configured to play a first video, wherein first background music in the first video is similar music matching with reference music in a preset music dimension;
a second video playing module, configured to switch the first video to a second video in response to a first switching operation triggered on the first video, and play the second video, wherein second background music in the second video is similar music that matches the reference music in a preset music dimension and is different from the first background music.

An embodiment of the present disclosure further provides an electronic device, which includes:
one or more processors;
a storage apparatus configured to store one or more programs;
when the one or more programs are executed by the one or more processors, the one or more processors are caused to implement the video playing method according to any one of the embodiments of the present disclosure.

The embodiments of the present disclosure further provide a storage medium including computer-executable instructions, when executed by a computer processor, for executing the video playing method according to any one of the embodiments of the present disclosure.

### BRIEF DESCRIPTION OF DRAWINGS

Throughout the drawings, the same or similar reference numerals refer to the same or similar elements. It should be understood that the figures are schematic and that components and elements are not necessarily drawn to scale.
Fig. 1 is a flowchart of a video playing method provided by an embodiment of the present disclosure;
Fig. 2 is an example of a video switching process according to an embodiment of the present disclosure;
Fig. 3 is an example of another video switching process according to an embodiment of the present disclosure;
Fig. 4 is another example of a video switching process according to an embodiment of the present disclosure;
Fig. 5a shows an example of a playlist control according to an embodiment of the present disclosure;
Fig. 5b is an example of another playlist control according to the embodiment of the present disclosure;
Fig. 6 is a flowchart of a video playing method provided by an embodiment of the present disclosure;
Fig. 7 is a schematic structural diagram of a video playing apparatus provided by an embodiment of the present disclosure;
Fig. 8 is a schematic structural diagram of an electronic device provided by an embodiment of the present disclosure.

### DETAILED DESCRIPTION

Embodiments of the present disclosure will be described below with reference to the accompanying drawings. It should be understood that the drawings and embodiments of the present disclosure are only used for illustrative purposes, and are not used to limit the protection scope of the present disclosure.

It should be understood that the steps described in the method embodiments of the present disclosure may be performed in a different order and/or in parallel.

As used herein, the term "including" and its variants are open-ended including, that is, "including but not limited to". The term "based on" is "at least partially based on". The term "one embodiment" means "at least one embodiment"; The term "another embodiment" means "at least one other embodiment"; The term "some embodiments" means "at least some embodiments". Related definitions of other terms will be given in the following description.

It should be noted that the concepts of "first" and "second" mentioned in this disclosure are only used to distinguish different devices, modules or units, and are not used to limit the order or interdependence of the functions performed by these devices, modules or units.

It should be noted that the modifications of "a" and "a plurality" mentioned in this disclosure are schematic rather than limiting, and those skilled in the art should understand that unless the context clearly indicates otherwise, they should be understood as "one or more".

Names of messages or information exchanged among multiple devices in the embodiment of the present disclosure are only used for illustrative purposes, and are not used to limit the scope of these messages or information.

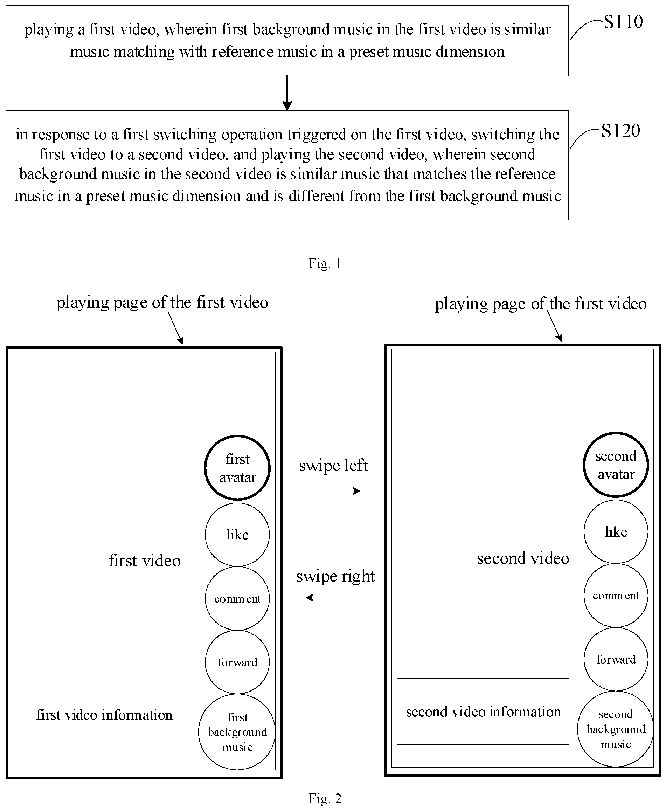

Fig. 1 is a flowchart diagram of a video playing method provided by an embodiment of the present disclosure, which is applicable to a case that after selecting a music for a user, a video having music similar to the music as background music is played. The method may be performed by a video playing apparatus, the apparatus may be implemented by the form of software and/or hardware, optionally, by an electronic device, which may be a mobile terminal, a Personal Computer (PC) end, or a server, etc.

As shown in Fig. 1, the video playing method includes the following steps:
S110: playing a first video, wherein first background music in the first video is similar music matching with reference music in a preset music dimension.

Reference music may refer to any music that requires to obtain similar music, e.g., the music of interest selected by the user. For example, if a user is interested in background music in a video currently watching, the background music may be taken as the reference music by triggering a selection operation on the background music. The first background music refers to the background music in the first video. The first background music matches the reference music in the preset music dimension, that is, the first background music is music similar to the reference music. The preset music dimension may be preset to identify the matching dimension of music similarity. The music using way dimension may refer to a way of matching a music similarity degree from the music using way. Music using way may refer to how the music is rendered when used by a video. For example, a piece of music may be used as background music in a finger dance video, and the user may use the piece of music to capture the same finger dance video in a follow-up way, so that the piece of music is given the usage way of the piece of music to capture a finger dance video. If there is another music that can also take a finger dance video, it indicates that the other music is also given a using way to take a finger dance video, so that the two music can be treated as similar music in the music using way dimension. The music style dimension may refer to a way of matching a music similarity degree from the style type that the music has. Music styles may include: hip hop, rap, rock, rhythm Bruce, electronic music, and the like. The music creator dimension may refer to a way of matching a music similarity degree from the music creator. The music creator may include at least one of a singer, a lyricist, and a composer.

After the user selects the reference music, the similar music matching the reference music in the preset music dimension can be determined from the music library, and the first video with the similar music as the background music can be played on the playing page, so that the user can quickly watch the first video with the music similar to the reference music as the background music without the user's manual search, enhancing interactivity with the user, and improving user viewing experience.

When playing the first video, the first video may be automatically played on the playing page, or the first video may be presented first, and the first video may be played in response to the playing operation triggered by the user for the presented first video, so as to meet the different playing requirements of the user.

S 120, in response to a first switching operation triggered on the first video, switching the first video to a second video, and playing the second video, wherein second background music in the second video is similar music that matches the reference music in a preset music dimension and is different from the first background music.

The first switching operation may refer to an operation of switching videos with different similar background music. The second background music refers to the background music in the second video. The second background music matches the reference music in the preset music dimension, that is, the second background music is also similar to the reference music, but the second background music is different from the first background music. A plurality of similar music matches the reference music in the preset music dimension. The first background music and the second background music are two different kinds of similar music that matches the reference music in the preset music dimension.

The user may trigger a first switching operation on the playing page of the first video, and the client can switch the first video to a second video with different similar background music in response to the first switching operation triggered by the user. After switching to the second video, the second video may be played automatically, or the second video may be presented first, and the second video may be played in response to the playing operation triggered by the user for the presented second video. By triggering the first switching operation, videos with different similar background music can be quickly played, so that users can watch videos with different similar background music more conveniently, thus meeting the viewing requirements of users for music similar to the reference music and videos with music similar to the reference music as background music, fitting the video interaction habit on the platform, enhancing the interaction with users and improving the viewing experience of users.

For example, the first switching operation for videos having different similar background music may be implemented in at least two ways as follows: as an implementation way, the "switching the first video to the second video in response to the first switching operation triggered on the first video" in S120 may include: switching the first video to the second video corresponding to the first preset direction in response to a swipe operation of the first preset direction triggered on the first video; or, in response to a swipe operation of a second preset direction on the first video, switching the first video to a second video corresponding to the second preset direction.

The first preset direction and the second preset direction may refer to two opposite swipe directions set in advance. For example, the swipe operation of the first preset direction is a swipe operation pointing left, and the swipe operation of the second preset direction is a swipe operation pointing right. Or, the swipe operation of the first preset direction is a swipe operation pointing right, and the swipe operation of the second preset direction is a swipe operation pointing left.

By triggering a swipe operation of different swipe directions on the playing page of the first video, the first video may be switched to a second video matching the swipe direction. For example, Fig. 2 is an example of a video switching process. As shown in Fig. 2, the user may trigger a leftward swipe operation on the playing page of the first video to switch the first video with the first background music to a second video with the second background music different from the first background music, so that the user may switch videos with different similar background music by swiping left and right on the playing page of the first video.

For example, for the switching way of the swipe operation, besides the video, an avatar, a like button, a comment button, a forward button, a background music button and video information may be included on the playing page of each video. As shown in Fig. 2, the first avatar, a like button, a comment button, a forward button, a first background music button, and first video information may be included on the playing page of the first video in addition to the first video. The first avatar may refer to the author avatar that created the first video. The like button is a button for triggering a like of the first video. The comment button is a button for triggering a comment on the first video. The forward button is a button for triggering forwarding of the first video. The first background music button may be a button for viewing a first background music page. The first video information is information related to the first video. For example, the first video information may include: author account information that created the first video, creation time information, content information of the first video, and the like. Similarly, the playing page of the second video may include, in addition to the second video, a second avatar, a like button, a comment button, a forward button, a second background music button, and second video information.

As another implementation, the video recommendation page includes: a first switching control and a second switching control, wherein the first switching control and the second switching control correspond to different video switching directions. Accordingly, the "switching the first video to the second video in response to the first switching operation triggered on the first video" in S 120 may include: switching the first video to the second video corresponding to the first switching control in response to the trigger operation acting on the first switching control; or, in response to a trigger operation acting on the second switching control, switching the first video to a second video corresponding to the second switching control.

The first switching control and the second switching control are controls set in advance for switching videos with similar background music from different directions. The first switching control and the second switching control may each be a control in the form of a button. For example, the first switching control may refer to a previous button, and the second switching control may refer to a next button, so that by triggering the previous button, the previous piece of music of the first background music is taken as the second background music to be played out among the plurality of music similar to the reference music. By triggering the next button, the next piece of music of the first background music is taken as the second background music to be played.

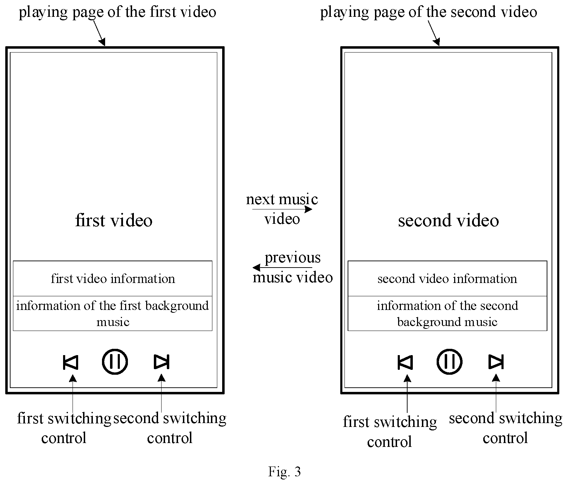

The user can switch videos with different similar background music by clicking on different switching controls on the playing page of the first video. For example, the user may trigger the first switching operation by clicking on the first switching control, and the client switches the first video to a second video matching the switching direction of the first switching control in response to the trigger operation acting on the first switching control. Alternatively, the user may trigger the second switching operation by clicking on the second switching control, and the client switches the first video to a second video matching the switching direction of the second switching control in response to the trigger operation acting on the second switching control. For example, Fig. 3 shows an example of another video switching process. As shown in Fig. 3, the user may click on the second switching control on the playing page of the first video, thereby switching the first video with the first background music to a second video with the next piece of music of the first background music as the second background music. Similarly, the user may also click on the first switch control on the playing page of the first video, thereby switching the first video with the first background music to the second video with the previous piece of music of the first background music as the second background music.

For example, the playing page of each video may include video information and information of background music in addition to the first switching control, the second switching control, and the video. As shown in Fig. 3, the playing page of the first video includes the first video information and the information of the first background music in addition to the first switching control, the second switching control, and the first video. The first video information is information related to the first video. For example, the first video information may include: author account information that created the first video, creation time information, content information of the first video, and the like. The information of the first background music may include a music name and creator information, and the like. Likewise, the playing page of the second video may include the second video information and the information of the second background music in addition to the first switching control, the second switching control and the second video.

The technical solution of the embodiments of the present disclosure, playing a first video, wherein first background music in the first video is similar music matching with reference music in a preset music dimension; in response to a first switching operation triggered on the first video, switching the first video to a second video, and playing the second video, wherein second background music in the second video is similar music that matches the reference music in a preset music dimension and is different from the first background music. Therefore, the videos with different similar background music can be quickly played out by triggering the first switching operation, without manual search, further enhancing interactivity with the user, and improving the user viewing experience.

On the basis of the above technical solution, the method may further include: in response to a second switching operation triggered on the first video, switching the first video to a third video and playing the third video, wherein the background music in the third video is the first background music.

The second switching operation may refer to an operation of switching videos having the same similar background music. The background music in the third video is the same music as the first background music, that is, the third video and the first video are two different videos with the same background music.

The user may trigger a second switching operation on the playing page of the first video, and the client may switch the first video to a third video with the same similar background music in response to the user-triggered second switching operation. After switching to the third video, the third video may be automatically played, or the third video may be presented first, and the third video may be played in response to a playing operation triggered by the user with respect to the presented third video. Other videos with the same similar background music can be played out quickly by triggering the second switching operation, so that the user can more conveniently watch different videos with the same background music, further enhancing interactivity with the user and improving the user viewing experience.

For example, switching the first video to the third video in response to a second switching operation triggered on the first video may include: switching the first video to a third video corresponding to a third preset direction in response to a swipe operation of the third preset direction triggered on the first video; or, in response to a swipe operation of a fourth preset direction triggered on the first video, switching the first video to a third video corresponding to the fourth preset direction.

The third preset direction and the fourth preset direction may refer to two opposite swipe directions set in advance. For example, the swipe operation of the third preset direction is a swipe operation pointing upwards, and the swipe operation of the fourth preset direction is a swipe operation pointing downward. Or, the swipe operation of the third preset direction is a swipe operation pointing downward, and the swipe operation of the fourth preset direction is a swipe operation pointing upwards.

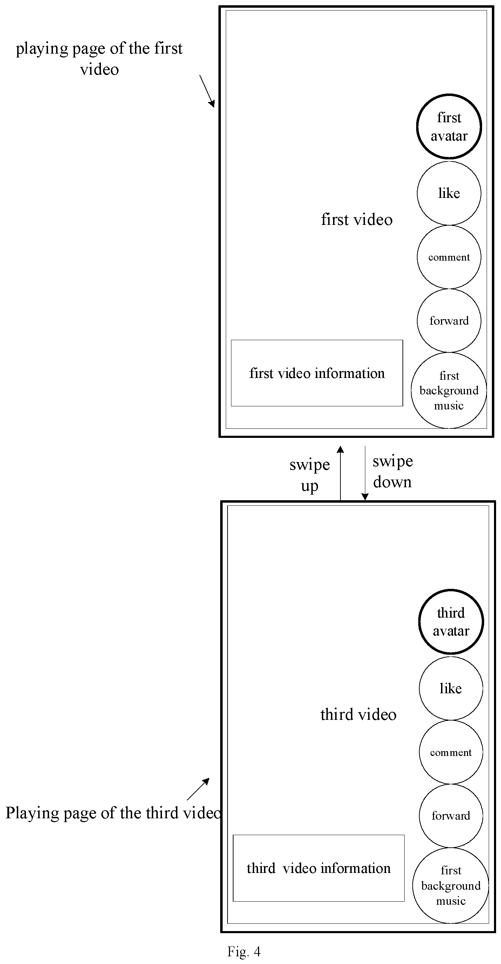

It is also possible on the playing page of the first video to switch a first video to a third video matching the swipe direction by triggering a swipe operation of a different swipe direction, thereby quickly playing out different videos with the same background music. For example, Fig. 4 shows an example of yet another video switching process. As shown in Fig. 4, the user may trigger a downward swipe operation on the playing page of the first video to switch a first video having a first background music to a third video also having the first background music, so that the user may switch different videos having the same background music by swiping up and down on the video recommendation page.

On the basis of the above technical scheme, the playing page of the first video may include a playlist control. The method may further include: presenting a playlist in response to a trigger operation on the playlist control, wherein each music in the playlist is similar music that matches the reference music in a preset music dimension.

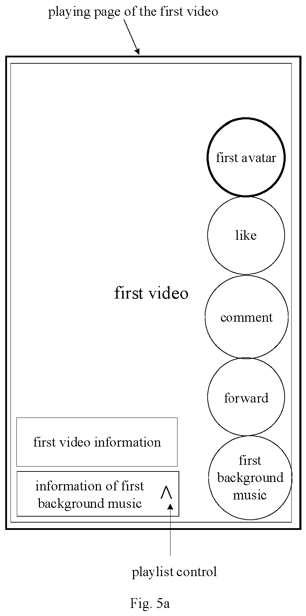

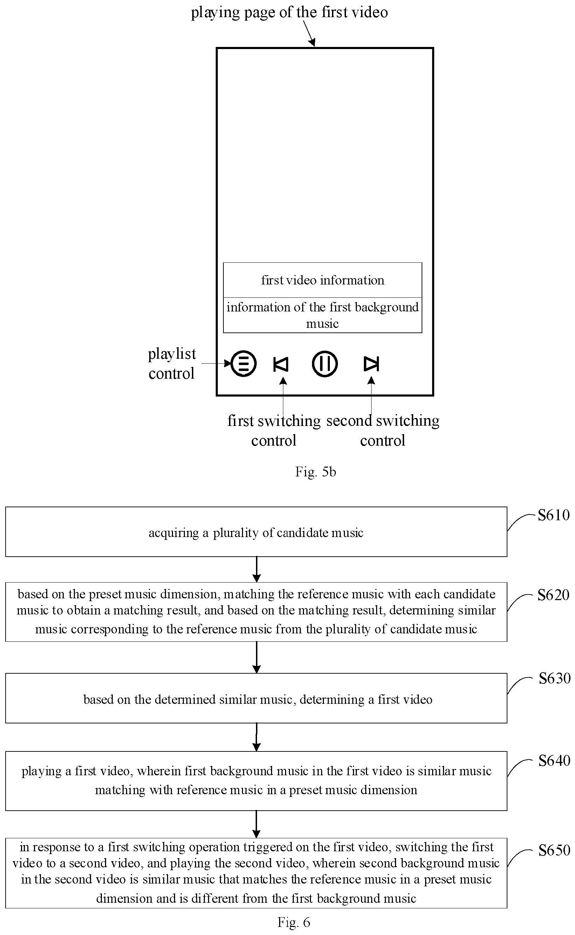

The playlist control may be preset to show the control of the playlist. For example, the playlist control may be a drop-down box control or a playlist button in the form of a button. The playlist may include all similar music that matches the reference music in the preset music dimension. The playlist control may be presented at any position on the playing page of the first video, and the presentation form and position of the playlist control are not limited in this embodiment. Fig. 5a and Fig. 5b show examples of two different playlist controls. As shown in Fig. 5a, when videos with different similar background music are switched by triggering a swipe operation, a triggerable playlist control can be displayed below the first video information, and the information of the first background music may be presented in the playlist control to remind the user of the information of the first background music in the currently played first video. As shown in Fig. 5b, when switching videos with different similar background music by clicking different switching controls, a playlist control in the form of a button may be displayed on the left side of the first switching control.

The client may respond to the trigger operation on the playlist control, such as the user clicking the playlist control, and can present the playlist composed of all similar music corresponding to the reference music on the playing page of the first video, so that the user can quickly know all similar music. If the number of similar music in the playlist is greater than the maximum presentation number on the playing page, some similar music can be displayed, and the rest can be displayed by turning pages or sliding the playlist. The similar music in the playlist may be arranged based on the similarity with the reference music, for example, the similar music with the greatest similarity is arranged at the top, so that the similar music with greater similarity can be displayed first, and the user experience can be improved.

For example, presenting the playlist may include: presenting the first background music in the playlist based on a first display mode; presenting other music in the playlist based on a second display mode different from the first display mode. Other music in the playlist is remaining music in the playlist except the first background music.

In the playlist, the first background music and other music are displayed in different modes, for example, the first background music is highlighted and other music is displayed in gray scale, or the first background music and other music are displayed in different display colors, so that the first background music can be highlighted to distinguish it from other music, and then the user can know that the music displayed in the playlist by the first display mode is the first background music in time, which further improves the user's viewing experience.

Fig. 6 is a flow schematic diagram of another video playing method provided by an embodiment of the present disclosure. A determination process of a first video is described based on the above disclosed embodiment. Explanations of terms therein identical or corresponding to the above-described plurality of disclosed embodiments are not repeated herein.

As shown in Fig. 6, the video playing method includes the following steps:
S610, acquiring a plurality of candidate music.

The candidate music may refer to music that needs to be matched with the reference music. The present embodiment may take music in the music library other than the reference music as the candidate music.

For example, when the preset music dimension is the music using way dimension, step S610 may include: screening out a plurality of to-be-selected music from the music library based on the music playback count corresponding to each music in the music library; based on the music playing information corresponding to each to-be-selected music, determining the candidate music having a common using way from the plurality of to-be-selected music.

The music may be played individually in a music library or by playing a video when the music is used as background music in the video. The music playback count may refer to the current total number of playing times of the music in the video platform. The to-be-selected music refers to music that may have a common using way. The music playing information corresponding to the to-be-selected music may include, but is not limited to: a video watching count corresponding to a video with the to-be-selected music as background music, the playback count when the to-be-selected music is played by way of playing the video, and contribution source information of the to-be-selected music.

If the music is played too few times, it indicates that the music is not hot, i.e., the number of videos shot by users using the music is too small, which makes the usage way of the music too small, and there is no common using way between the music and other music. If the music is played too many times, it indicates that the music is too hot, i.e., the videos shot by users using the music are too messy, which makes the music used in too many ways, and it is impossible to extract the common using way with other music. The music in the music library whose music playback count is within the preset playback count range is used as the to-be-selected music, so that all to-be-selected music that may have a common using way can be preliminarily selected. By screening out the to-be-selected music based on the music playing information corresponding to each to-be-selected music, the candidate music with common using way can be obtained, so as to obtain a more accurate music matching range in the music using way dimension and further improve the accuracy of music matching.

For example, based on the music play information corresponding to each to-be-selected music, determining candidate music having a common using way from the plurality of to-be-selected music, may include: acquiring video watching count corresponding to a music page of each to-be-selected music; determining a target playing proportion corresponding to each to-be-selected music according to a target playback count and a total playback count corresponding to each to-be-selected music, wherein the target playback count refers to the number of playing times of playing the to-be-selected music through the music page corresponding to the to-be-selected music; determining a target contribution proportion corresponding to each to-be-selected music according to a target contribution quantity and a total contribution quantity corresponding to each to-be-selected music, wherein the target contribution quantity is a quantity of music contributions to the to-be-selected music by a preset music using way; determining the to-be-selected music is a candidate music having a common using way, in a case where the video watching count corresponding to the to-be-selected music is greater than a preset watching count, the target playing proportion is greater than a preset playing proportion, and the target contribution proportion is greater than a preset contribution proportion.

The music page may be a page used to show the information of the to-be-selected music, that is, the music details page. The music page includes not only the information of the to-be-selected music, but also the video thumbnails corresponding to all videos with the to-be-selected music as the background music, so that the corresponding videos can be displayed and played in response to the triggering operation on the video thumbnails, so that the videos can be watched by triggering the video thumbnails in the music page. The video watching count may refer to the average number of video thumbnails triggered in the music page. For example, the video watching count refers to the average number of people watching the video in a music page. The target playback count may refer to the number of playing times that the to-be-selected music is played out by way of playing the video in the music page. The preset music using way may refer to a using way of music set in advance, such as a way of following the music. The target contribution quantity is the quantity of music for which the contribution source is the preset music using way, such as the amount of follow-up on the music.

For each to-be-selected music, a ratio between the target playback count and the total playback count corresponding to the to-be-selected music may be taken as a target playing proportion corresponding to the to-be-selected music, and a ratio between the target contribution quantity and the total contribution quantity corresponding to the to-be-selected music may be taken as a target contribution proportion corresponding to the to-be-selected music, and when it is detected that the video watching count corresponding to the to-be-selected music is greater than a preset watching count, the target playing proportion is greater than a preset playing proportion, and the target contribution proportion is greater than a preset contribution proportion, the to-be-selected music may be determined as a candidate music having a common using way, Thus, all candidate music having a common using way can be screened out from a plurality of to-be-selected music.

S620, based on the preset music dimension, matching the reference music with each candidate music to obtain a matching result, and based on the matching result, determining similar music corresponding to the reference music from the plurality of candidate music.

When the preset music dimension is the music style dimension, the music style corresponding to each candidate music and the music style corresponding to the reference music may be matched. If the musical style of the candidate music is the same as the musical style corresponding to the reference music, the candidate music may be regarded as the similar music corresponding to the reference music, i.e., the candidate music may be regarded as the music matching the reference music, so that all similar music matching the reference music in the musical style dimension can be screened out.

When the preset music dimension is the music creator dimension, the music creator corresponding to each candidate music and the music creator corresponding to the reference music may be matched. If the music creator of the candidate music is the same as the music creator of the reference music, the candidate music may be considered as the similar music corresponding to the reference music, so that all similar music matching the reference music in the music creator dimension may be screened out.

When the preset music dimension is the music using way dimension, S620 may include: acquiring a first to-be-selected video having the reference music as background music, and a second to-be-selected video having each candidate music as background music; based on video feature information of the first to-be-selected video corresponding to the reference music, determining first video feature information corresponding to the reference music; determining second video feature information corresponding to each candidate music based on the video feature information of the second to-be-selected video corresponding to each candidate music; determining a music similarity between the reference music and each candidate music based on the first video feature information and the second video feature information; based on the music similarity, determining all similar music to which the reference music corresponds from the plurality of candidate music.

The video feature information of the first to-be-selected video may include static feature information of the first to-be-selected video itself and dynamic feature information that changes over time. For example, the video feature information of the first to-be-selected video may be a 256-dimensional feature vector. The video feature information of the second to-be-selected video may also include static feature information of the second to-be-selected video itself and dynamic feature information that changes over time. For example, the video feature information of the second to-be-selected video may also be a 256-dimensional feature vector.

All the first to-be-selected videos with the reference music as background music can be acquired, and the video feature information of all the first to-be-selected videos is subjected to average processing, and the first video feature information corresponding to the reference music is obtained. Similarly, for each candidate music, all the second to-be-selected videos having the candidate music as background music may be obtained, and the video feature information of all the second to-be-selected videos may be averaged to obtain the second video feature information corresponding to the candidate music. The cosine value between the reference music and the candidate music may be determined as the music similarity between the reference music and the candidate music according to the first video feature information and the second video feature information based on a cosine similarity calculation method. The candidate music with the music similarity greater than the preset similarity threshold can be taken as the similar music corresponding to the reference music, so that centering on the video, other music having the same usage way as the reference music can be more accurately identified, further improving the accuracy of the matching of the music usage way.

For example, a plurality of first to-be-selected videos are provided, based on the video feature information of the first to-be-selected video corresponding to the reference music, determining the first video feature information corresponding to the reference music, may include: based on video playing count information of each first to-be-selected video corresponding to the reference music, screening the plurality of first to-be-selected videos, obtaining a preset number of third to-be-selected videos that are screened out; performing average processing on the video feature information corresponding to the preset number of third to-be-selected videos, and obtaining the first video feature information corresponding to the reference music.

The video playing count information may refer to a total playing count or an average playing count of the video in a preset time period. For example, based on the video playing count information corresponding to each of the plurality of first to-be-selected videos, ranking the plurality of first to-be-selected videos according to the video playing count by high to low, and taking the top preset number of first to-be-selected videos from the ranked first to-be-selected videos as the third to-be-selected videos, so as to screen out the third to-be-selected videos which have more representative of the usage way from the first to-be-selected videos. Performing vector average processing on the video feature information corresponding to all the third to-be-selected videos, and taking the obtained average feature vector as the first video feature information corresponding to the reference music.

In the same way, a plurality of first to-be-selected videos are provided, based on the video feature information of the second to-be-selected video corresponding to each candidate music, determining the second video feature information corresponding to each candidate music, may include: based on video playing count information of each second to-be-selected video corresponding to each candidate music, screening the plurality of second to-be-selected videos, obtaining a preset number of fourth to-be-selected videos that are screened out; performing average processing on the video feature information corresponding to the preset number of fourth to-be-selected videos, and obtaining the second video feature information corresponding to each candidate music. The embodiment can obtain more accurate first video feature information and second video feature information by screening the first to-be-selected video and the second to-be-selected video, which further improves the accuracy of music matching.

If there are at least two preset music dimensions, all similar music matched with the reference music in each preset music dimension may be subjected to intersection processing, and the similar music matched with the reference music in all preset music dimensions is taken as the similar music corresponding to the reference music.

S630, based on the determined similar music, determining a first video.

After all similar music corresponding to the reference music is acquired, a video with any one of the similar music as background music may be taken as the first video.

For example, S630 may include: ranking all similar music that is determined to obtain a similar music sequence; acquiring first music in the similar music sequence, and determining at least one first candidate video with the first music as background music; determining the first video from at least one first candidate video according to video playing information corresponding to each first candidate video.

For example, ranking all the similar music in descending order based on the music similarity between each similar music and the reference music, and obtaining a similar music sequence in which the music similarity decreases in order. The first music in the similar music sequence may be taken as the first music, and all the first candidate videos with the first music as the background music are obtained, the first candidate video with the highest video playing count may be determined as the first video, i.e., the first candidate video with the highest hotness as the first video.

The determination operation of the first video may be performed locally in the client or remotely in the server and the determined first video is transmitted to the client for playing, and the subject of performing the determination operation of the first video is not particularly limited in this embodiment.

S640, playing a first video, wherein first background music in the first video is similar music matching with reference music in a preset music dimension.

S650, in response to a first switching operation triggered on the first video, switching the first video to a second video, and playing the second video, wherein second background music in the second video is similar music that matches the reference music in a preset music dimension and is different from the first background music.

Before switching the first video to the second video, the second video to be switched to can be determined based on all similar music corresponding to the reference music, the first switching operation and the first background music.

For example, before switching the first video to the second video, the method may further include: according to the sequence position of the first background music in the similar music sequence and the first switching operation, determining the second music in the similar music sequence, and determining at least one second candidate video with the second music as background music; determining a second video from the at least one second candidate video according to the video playing information corresponding to each second candidate video.

If the first switching operation represents an operation to switch to the next music video, such as the user swiping to the left or clicking on the second switching control, the next piece of music of the first background music in the similar music sequence may be determined to be the second music. Alternatively, if the first switching operation represents an operation to switch to the previous music video, such as the user swiping to the right or clicking on the first switching control, the last piece of music of the first background music in the similar music sequence may be determined to be the second music. All of the second candidate videos having the second music as the background music are obtained, and the second candidate video having the highest video playing count may be determined as the third video, i.e., the second candidate video with the highest popularity as the second video, so that the user may watch the second video having a different background music and the highest popularity.

According to the technical scheme of the embodiment of the present disclosure, by acquiring a plurality of candidate music, matching the reference music with each candidate music based on a preset music dimension to obtain a matching result, determining all similar music corresponding to the reference music from all the candidate music based on the matching result, and determining the first video based on all the determined similar music, so that the matching of music similarity can be carried out on the preset music dimension to meet personalized service requirements.

On the basis of the above technical solution, before switching the first video to the third video, the method further includes: determining a third video based on the first candidate video and the first video.

When the videos with the same background music are switched by triggering the second switching operation, all the first candidate videos can be ranked based on the video playing information corresponding to the first candidate videos with the first background music, obtaining a ranked video sequence, such as a video sequence of which the video playing count decreases sequentially. A third video to switch to is determined based on the ranked video sequence, the second switching operation, and the first video. For example, if the second switching operation represents an operation of switching to a next video, such as a user swiping upwards, the next video of the first video may be determined to be the third video in the video sequence. Alternatively, if the second switching operation represents an operation of switching to the previous video, such as the user swiping downwards, the previous video of the first video may be determined as the third video in the video sequence, so that other videos with the same background music can be watched quickly by the user-triggered second switching operation, further improving the user viewing experience.

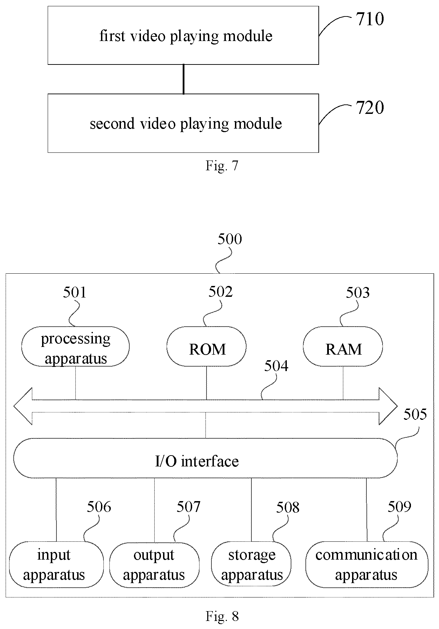

Fig. 7 is a schematic structural diagram of a video playing apparatus provided by an embodiment of the present disclosure. As shown in Fig. 7, the apparatus includes a first video playing module 710 and a second video playing module 720.

The first video playing module 710 is configured to play a first video, wherein first background music in the first video is similar music matching with reference music in a preset music dimension; the second video playing module 720 is configured to switch the first video to a second video in response to a first switching operation triggered on the first video, and play the second video, wherein second background music in the second video is similar music that matches the reference music in a preset music dimension and is different from the first background music.

According to the technical scheme provided by the embodiment of the disclosure, by playing a first video, the first background music in the first video is similar music matched with reference music in a preset music dimension, and in response to a first switching operation triggered by the first video, the first video is switched to a second video, and the second video is played, and the second background music in the second video is similar music matched with the reference music in a preset music dimension and different from the first background music. Therefore, by triggering the first switching operation, videos with different similar background music can be quickly played without manual search, thus enhancing the interaction with users and improving the viewing experience of users.

On the basis of the above technical scheme, the second video playing module 720 is configured to switch the first video to the second video by following steps: in response to a swipe operation of a first preset direction triggered on the first video, switching the first video to a second video corresponding to the first preset direction; or, in response to a swipe operation of a second preset direction triggered on the first video, switching the first video to a second video corresponding to the second preset direction.

On the basis of the above technical scheme, the swipe operation of the first preset direction is a swipe operation pointing left, and the swipe operation of the second preset direction is a swipe operation pointing right; or, the swipe operation of the first preset direction is a swipe operation pointing right, and the swipe operation of the second preset direction is a swipe operation pointing left.

On the basis of the above technical scheme, the playing page of the first video includes a first switching control and a second switching control, and the first switching control and the second switching control correspond to different video switching directions. The second video playing module 720 is configured to switch the first video to the second video by following steps: in response to a trigger operation acting on the first switching control, switching the first video to a second video corresponding to the first switching control; or, in response to a trigger operation acting on the second switching control, switching the first video to a second video corresponding to the second switching control.

On the basis of the above technical scheme, the apparatus further includes a third video playing module, configured to switch the first video to a third video in response to a second switching operation triggered on the first video, and play the third video, wherein the background music in the third video is the first background music.

On the basis of the above technical scheme, the third video playing module is configured to switch the first video to the third video in the following ways: in response to a swipe operation of a third preset direction triggered on the first video, switching the first video to a third video corresponding to the third preset direction; or, in response to a swipe operation of a fourth preset direction triggered on the first video, switching the first video to a third video corresponding to the fourth preset direction.

On the basis of the above technical scheme, the swipe operation of the third preset direction is a swipe operation pointing upwards, and the swipe operation of the fourth preset direction is a swipe operation pointing downwards; or, the swipe operation of the third preset direction is a swipe operation pointing downwards, and the swipe operation of the fourth preset direction is a swipe operation pointing upwards.

On the basis of the above technical scheme, the playing page of the first video includes a playlist control. The apparatus also includes a playlist presentation module, configured to present a playlist in response to a trigger operation on the playlist control, wherein each music in the playlist is similar music that matches the reference music in a preset music dimension.

On the basis of the above technical scheme, the playlist presentation module is configured to present the first background music in the playlist based on a first display mode; present other music in the playlist based on a second display mode different from the first display mode, wherein the other music in the playlist is remaining music in the playlist except the first background music.

On the basis of the above technical scheme, the preset music dimension includes a music using way dimension, a music style dimension, or a music creator dimension.

On the basis of the above technical scheme, the apparatus further includes a candidate music acquisition module configured to acquire a plurality of candidate music before playing the first video; a music matching module configured to match the reference music with each candidate music based on a preset music dimension to obtain a matching result, and determine similar music corresponding to the reference music from the plurality of candidate music based on the matching result; a first video determination module configured to determine a first video based on the determined similar music.

On the basis of the above technical scheme, when the preset music dimension is the music using way dimension, the music matching module includes: a to-be-selected video acquisition unit configured to acquire a first to-be-selected video with the reference music as the background music and a second to-be-selected video with each candidate music as the background music; a first video feature information determination unit configured to determine the first video feature information corresponding to the reference music based on the video feature information of the first to-be-selected video corresponding to the reference music; a second video feature information determination unit configured to determine the second video feature information corresponding to each candidate music based on the video feature information of the second to-be-selected video corresponding to each candidate music; a music similarity determination unit configured to determine the music similarity between the reference music and each candidate music based on the first video feature information and the second video feature information; a similar music determination unit configured to determine the similar music corresponding to the reference music from the plurality of candidate music based on the music similarity.

On the basis of the above technical scheme, a plurality of first to-be-selected videos are provided, and the first video feature information determination unit is configured to: based on the video playing count information of each first to-be-selected video corresponding to the reference music, screen the plurality of first to-be-selected videos to obtain a preset number of third to-be-selected videos that are screened out; perform average processing on video feature information corresponding to the preset number of third to-be-selected videos, to obtain the first video feature information corresponding to the reference music.

On the basis of the above technical scheme, the candidate music acquisition module includes: a candidate music determination unit configured to: based on a music playback count corresponding to each music in a music library, screen out a plurality of to-be-selected music from the music library; a candidate music determination unit, configured to: based on music playing information corresponding to each to-be-selected music, determine candidate music having a common using way from the plurality of to-be-selected music.

On the basis of the above technical scheme, the candidate music determination unit is configured to: acquire video watching count corresponding to a music page of each to-be-selected music; determine a target playing proportion corresponding to each to-be-selected music according to a target playback count and a total playback count corresponding to each to-be-selected music, wherein the target playback count refers to a number of playing times of playing the to-be-selected music through the music page corresponding to the to-be-selected music; determine a target contribution proportion corresponding to each to-be-selected music according to a target contribution quantity and a total contribution quantity corresponding to each to-be-selected music, wherein the target contribution quantity is a quantity of music contributions to the to-be-selected music by a preset music using way; determine a piece of to-be-selected music is the candidate music having the common using way when the video watching count corresponding to the piece of to-be-selected music is greater than a preset watching count, the target playing proportion corresponding to the piece of to-be-selected music is greater than a preset playing proportion, and the target contribution proportion corresponding to the piece of to-be-selected music is greater than a preset contribution proportion.

On the basis of the above technical scheme, the first video determination module is configured to: rank all similar music that is determined to obtain a similar music sequence; acquire first music in the similar music sequence, and determine at least one first candidate video with the first music as background music; determine the first video from the at least one first candidate video according to video playing information corresponding to each first candidate video.

On the basis of the above technical scheme, the apparatus further includes a second video determination module, configured to determine second music in the similar music sequence according to a sequence position of the first background music in the similar music sequence and the first switching operation, and determine at least one second candidate video with the second music as background music; determine a second video from the at least one second candidate video according to video playing information corresponding to each second candidate video.

The video playing apparatus provided by the embodiment of the present disclosure can execute the video playing method provided by any embodiment of the present disclosure and has corresponding functional modules and effects for executing the video playing method.

It is worth noting that the units and modules included in the above device are only divided according to functional logic, but they are not limited to the above division, as long as the corresponding functions can be realized; In addition, the specific names of each functional unit are only for the convenience of distinguishing each other, and are not used to limit the protection scope of the disclosed embodiment.

Fig. 8 is a structural schematic diagram of an electronic device provided by an embodiment of the present disclosure. Reference is now made to Fig. 8, which shows a structural schematic diagram of an electronic device (for example, a terminal device or a server in Fig. 8) 500 suitable for implementing an embodiment of the present disclosure. The terminal devices in the embodiments of the present disclosure may include, but not limited to, mobile terminals such as a mobile phone, a notebook computer, a digital broadcast receiver, a personal digital assistant (PDA), a tablet computer (PAD), a portable multimedia player (PMP), a vehicle-mounted terminal (for example, a vehicle-mounted navigation terminal) and the like, and fixed terminals such as a digital TV, a desktop computer and the like. The electronic device shown in Fig. 8 is only an example and should not bring any limitation to the functions and application scope of the embodiments of the present disclosure.

As shown in Fig. 8, the electronic device 500 may include a processing apparatus (for example, a central processing unit, a graphics processing unit, etc.) 501, which may perform various appropriate actions and processes according to programs stored in a read-only memory (ROM) 502 or programs loaded from a storage apparatus 508 into a random access memory (RAM) 503. In the RAM 503, various programs and data required for operations of the electronic device 500 are also stored. The processing apparatus 501, the ROM 502 and the RAM 503 are connected to each other through a bus 504. An input/output (I/O) interface 505 is also connected to the bus 504.

Generally, the following apparatuses may be connected to the I/O interface 505: an input apparatus 506 including, for example, a touch screen, a touch pad, a keyboard, a mouse, a camera, a microphone, an accelerometer, a gyroscope, etc.; an output apparatus 507 including, for example, a liquid crystal display (LCD), a speaker, a vibrator, etc.; a storage apparatus 508 including, for example, a magnetic tape, a hard disk, etc.; and a communication apparatus 509. The communication apparatus 509 may allow the electronic device 500 to perform wireless or wired communication with other devices to exchange data. While the electronic device 500 with various apparatuses is shown in Fig. 8, it should be understood that it is not required to implement or have all the apparatuses shown. More or fewer apparatuses may alternatively be implemented or provided.

According to the embodiments of the present disclosure, processes described above with reference to the flowchart may be implemented as a computer software program. For example, an embodiment of the present disclosure includes a computer program product, which includes a computer program carried on a non-transitory computer-readable medium, the computer program including program codes for performing the method shown in the flowchart. In such an embodiment, the computer program may be downloaded and installed from a network through the communication apparatus 509, or installed from the storage apparatus 508, or installed from the ROM 502. When the computer program is executed by the processing apparatus 501, the above functions defined in the method of the embodiment of the present disclosure are performed.

The names of messages or information exchanged between apparatuses in the embodiments of the present disclosure are for illustrative purposes only, and are not intended to limit the scope of the messages or information.

The electronic device provided by the embodiment of the present disclosure belongs to the same disclosed concept as the video playing method provided by the embodiment above, technical details that are not described in detail in the present embodiment can be referred to the embodiments above, and the present embodiment has the same advantageous effects as the embodiments above.

An embodiment of the present disclosure provides a computer storage medium having stored thereon a computer program, which, when executed by a processor, implement the video playing method provided in the embodiment above.

It should be noted that the computer-readable medium mentioned above in the present disclosure may be a computer-readable signal medium or a computer-readable storage medium or any combination of both. The computer-readable storage medium may be, for example, but not limited to, an electrical, magnetic, optical, electromagnetic, infrared, or semiconductor system, apparatus or device, or a combination of any of the above. More specific examples of the computer-readable storage medium may include, but not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium containing or storing a program, which program may be used by or in combination with an instruction execution system, apparatus or device. In the present disclosure, the computer-readable signal medium may include a data signal propagated in a baseband or as part of a carrier wave, in which computer-readable program codes are carried. This propagated data signal may take multiple forms, including but not limited to electromagnetic signals, optical signals or any suitable combination of the above. The computer-readable signal medium may also be any computer-readable medium other than the computer-readable storage medium, and may send, propagate or transmit a program used by or in combination with an instruction execution system, apparatus or device. The program codes contained in the computer-readable medium may be transmitted by any suitable medium, including but not limited to: electric wires, optical cables, radio frequency (RF) and the like, or any suitable combination of the above.

In some implementations, the client and the server can communicate by using any currently known or future developed network protocol such as a hypertext transfer protocol (HTTP), and may be interconnected with digital data communication in any form or medium (for example, a communication network). Examples of the communication network include a local area network ("LAN"), a wide area network ("WAN"), the Internet work (for example, the Internet) and an end-to-end network (for example, an ad hoc end-to-end network), as well as any currently known or future developed networks.

The computer-readable medium described above may be included in the electronic device; or it may exist alone without being assembled into the electronic device.

The computer-readable medium carries one or more programs which, when executed by the electronic device, cause the electronic device to: play a first video, wherein first background music in the first video is similar music matching with reference music in a preset music dimension; in response to a first switching operation triggered on the first video, switch the first video to a second video, and play the second video, wherein second background music in the second video is similar music that matches the reference music in a preset music dimension and is different from the first background music.

Computer program codes for performing the operations of the present disclosure may be written in one or more programming languages or combinations thereof, including but not limited to object-oriented programming languages such as Java, Smalltalk and C++, and conventional procedural programming languages such as "C" or similar programming languages. The program codes may be completely executed on a user computer, partially executed on the user computer, executed as an independent software package, partially executed on the user computer and partially executed on a remote computer, or completely executed on the remote computer or a server. In the case involving the remote computer, the remote computer may be connected to the user computer through any type of network, including a local area network (LAN) or a wide area network (WAN), or may be connected to an external computer (for example, through the Internet using an Internet service provider).

The flowchart and block diagrams in the drawings illustrate architectures, functions and operations of possible implementations of the systems, methods and the computer program product according to various embodiments of the present disclosure. In this regard, each block in the flowchart or block diagram may represent a part of a module, a program segment, or codes, which includes one or more executable instructions for implementing specified logical functions. It is also noted that, in some alternative implementations, the functions noted in the block may occur out of the order noted in the figures. For example, two blocks shown in succession may, in fact, be executed substantially in parallel, and may sometimes be executed in the reverse order, depending on the functions involved. It is also noted that each block in the block diagrams and/or flowcharts, and combinations of blocks in the block diagrams and/or flow diagrams, may be implemented by a dedicated hardware-based system that performs specified functions or operations, or by a combination of dedicated hardware and computer instructions.

The units involved in the embodiments described in the present disclosure may be implemented by software or hardware. The name of the unit does not constitute a limitation on the unit itself in some cases. For example, a first acquisition unit can also be described as "a unit that acquires at least two Internet protocol addresses".

The functions described above herein may be at least partially performed by one or more hardware logic components. For example, without limitation, exemplary types of hardware logic components that may be used include: a field programmable gate array (FPGA), an application-specific integrated circuit (ASIC), an application specific standard product (ASSP), a system-on-chip (SOC), a complex programmable logic device (CPLD) and the like.

In the context of the present disclosure, the machine-readable medium may be a tangible medium that may include or store a program used by or in connection with an instruction execution system, apparatus or device. The machine-readable medium may be a machine-readable signal medium or a machine-readable storage medium. The machine-readable medium may include, but not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a convenient compact disk read-only memory (CD-ROM), an optical storage device, a magnetic storage device, or any suitable combination of the above.

According to one or more embodiments of the present disclosure, Example 1 provides a video playing method, including: playing a first video, wherein first background music in the first video is similar music matching with reference music in a preset music dimension; in response to a first switching operation triggered on the first video, switching the first video to a second video, and playing the second video, wherein second background music in the second video is similar music that matches the reference music in a preset music dimension and is different from the first background music

According to one or more embodiments of the present disclosure, Example 2 provides a video playing method, further including: in response to a swipe operation of a first preset direction triggered on the first video, switching the first video to a second video corresponding to the first preset direction; or, in response to a swipe operation of a second preset direction triggered on the first video, switching the first video to a second video corresponding to the second preset direction.

According to one or more embodiments of the present disclosure, Example 3 provides a video playing method, further including: a swipe operation of the first preset direction is a swipe operation pointing left, and the swipe operation of the second preset direction is a swipe operation pointing right; or, the swipe operation of the first preset direction is a swipe operation pointing right, and the swipe operation of the second preset direction is a swipe operation pointing left.

According to one or more embodiments of the present disclosure, Example 4 provides a video playing method, further including: optionally, a playing page of the first video comprises a first switching control and a second switching control, wherein the first switching control and the second switching control correspond to different video switching directions; in response to the first switching operation triggered on the first video, switching the first video to the second video, includes: in response to a trigger operation acting on the first switching control, switching the first video to a second video corresponding to the first switching control; or, in response to a trigger operation acting on the second switching control, switching the first video to a second video corresponding to the second switching control.

According to one or more embodiments of the present disclosure, Example 5 provides a video playing method, further including: optionally, in response to a second switching operation triggered on the first video, switching the first video to a third video, and playing the third video, wherein background music in the third video is the first background music.

According to one or more embodiments of the present disclosure, Example 6 provides a video playing method, further including: optionally, in response to a second switching operation triggered on the first video, switching the first video to the third video, includes: in response to a swipe operation of a third preset direction triggered on the first video, switching the first video to a third video corresponding to the third preset direction; or, in response to a swipe operation of a fourth preset direction triggered on the first video, switching the first video to a third video corresponding to the fourth preset direction.

According to one or more embodiments of the present disclosure, Example 7 provides a video playing method, further including: optionally, the swipe operation of the third preset direction is a swipe operation pointing upwards, and the swipe operation of the fourth preset direction is a swipe operation pointing downwards; or, the swipe operation of the third preset direction is a swipe operation pointing downwards, and the swipe operation of the fourth preset direction is a swipe operation pointing upwards.

According to one or more embodiments of the present disclosure, Example 8 provides a video playing method, further including: optionally, a playing page of the first video includes: a playlist control; and the method further including: presenting a playlist in response to a trigger operation on the playlist control, wherein each music in the playlist is similar music that matches the reference music in a preset music dimension.

According to one or more embodiments of the present disclosure, Example 9 provides a video playing method, further including: optionally, presenting the playlist, including: presenting the first background music in the playlist based on a first display mode; presenting other music in the playlist based on a second display mode different from the first display mode, wherein the other music in the playlist is remaining music in the playlist except the first background music.

According to one or more embodiments of the present disclosure, Example 10 provides a video playing method, further including: optionally, the preset music dimension including a music using way dimension, a music style dimension, or a music creator dimension.

According to one or more embodiments of the present disclosure, Example 11 provides a video playing method, further including: optionally, before playing the first video, further including: acquiring a plurality of candidate music; based on a preset music dimension, matching the reference music with each candidate music to obtain a matching result, and based on the matching result, determining similar music corresponding to the reference music from the plurality of candidate music; based on the similar music that is determined, determining the first video.

According to one or more embodiments of the present disclosure, Example 12 provides a video playing method, further including: optionally, when the preset music dimension is a music using way dimension, based on the preset music dimension, matching the reference music with each candidate music to obtain the matching result, and based on the matching result, determining the similar music corresponding to the reference music from the plurality of candidate music, including: acquiring a first to-be-selected video with the reference music as background music, and a second to-be-selected video with each candidate music as background music; based on video feature information of the first to-be-selected video corresponding to the reference music, determining first video feature information corresponding to the reference music; based on video feature information of the second to-be-selected video corresponding to each candidate music, determining second video feature information corresponding to each candidate music; determining a music similarity between the reference music and each candidate music based on the first video feature information and the second video feature information; determining the similar music corresponding to the reference music from the plurality of candidate music based on the music similarity.

According to one or more embodiments of the present disclosure, Example 13 provides a video playing method, further including: optionally, a plurality of first to-be-selected videos are provided, and based on the video feature information of the first to-be-selected video corresponding to the reference music, determining the first video feature information corresponding to the reference music, including: based on the video playing count information of each first to-be-selected video corresponding to the reference music, screening the plurality of first to-be-selected videos to obtain a preset number of third to-be-selected videos that are screened out; performing average processing on video feature information corresponding to the preset number of third to-be-selected videos, to obtain the first video feature information corresponding to the reference music.

According to one or more embodiments of the present disclosure, Example 14 provides a video playing method, further including: optionally, obtaining the plurality of candidate music, including: based on a music playback count corresponding to each music in a music library, screening out a plurality of to-be-selected music from the music library; based on music playing information corresponding to each to-be-selected music, determining candidate music having a common using way from the plurality of to-be-selected music.

According to one or more embodiments of the present disclosure, Example 15 provides a video playing method, further including: optionally, based on the music playing information corresponding to each to-be-selected music, determining the candidate music having the common using way from the plurality of to-be-selected music, including: acquiring video watching count corresponding to a music page of each to-be-selected music; determining a target playing proportion corresponding to each to-be-selected music according to a target playback count and a total playback count corresponding to each to-be-selected music, wherein the target playback count refers to a number of playing times of playing the to-be-selected music through the music page corresponding to the to-be-selected music; determining a target contribution proportion corresponding to each to-be-selected music according to a target contribution quantity and a total contribution quantity corresponding to each to-be-selected music, wherein the target contribution quantity is a quantity of music contributions to the to-be-selected music by a preset music using way; determining a piece of to-be-selected music is the candidate music having the common using way when the video watching count corresponding to the piece of to-be-selected music is greater than a preset watching count, the target playing proportion corresponding to the piece of to-be-selected music is greater than a preset playing proportion, and the target contribution proportion corresponding to the piece of to-be-selected music is greater than a preset contribution proportion.

According to one or more embodiments of the present disclosure, Example 16 provides a video playing method, further including: optionally, determining the first video based on the similar music that is determined, including: ranking all similar music that is determined to obtain a similar music sequence; acquiring first music in the similar music sequence, and determining at least one first candidate video with the first music as background music; determining the first video from the at least one first candidate video according to video playing information corresponding to each first candidate video.

According to one or more embodiments of the present disclosure, Example 17 provides a video playing method, further including: optionally, before switching the first video to the second video, further including: determining second music in the similar music sequence according to a sequence position of the first background music in the similar music sequence and the first switching operation, and determining at least one second candidate video with the second music as background music; determining a second video from the at least one second candidate video according to video playing information corresponding to each second candidate video.

According to one or more embodiments of the present disclosure, Example 18 provides a video playing apparatus, a first video playing module, configured to play a first video, wherein first background music in the first video is similar music matching with reference music in a preset music dimension; a second video playing module, configured to switch the first video to a second video in response to a first switching operation triggered on the first video, and play the second video, wherein second background music in the second video is similar music that matches the reference music in a preset music dimension and is different from the first background music.

## Claims

1. A video playing method, comprising:
playing a first video, wherein first background music in the first video is similar music matching with reference music in a preset music dimension;
in response to a first switching operation triggered on the first video, switching the first video to a second video, and playing the second video, wherein second background music in the second video is similar music that matches the reference music in a preset music dimension and is different from the first background music.

2. The video playing method according to claim 1, wherein, in response to the first switching operation triggered on the first video, switching the first video to the second video, comprises:
in response to a swipe operation of a first preset direction triggered on the first video, switching the first video to a second video corresponding to the first preset direction; or,
in response to a swipe operation of a second preset direction triggered on the first video, switching the first video to a second video corresponding to the second preset direction.

3. The video playing method according to claim 2, wherein the swipe operation of the first preset direction is a swipe operation pointing left, and the swipe operation of the second preset direction is a swipe operation pointing right; or,
the swipe operation of the first preset direction is a swipe operation pointing right, and the swipe operation of the second preset direction is a swipe operation pointing left.

4. The video playing method according to claim 1, wherein a playing page of the first video comprises a first switching control and a second switching control, wherein the first switching control and the second switching control correspond to different video switching directions;
in response to the first switching operation triggered on the first video, switching the first video to the second video, comprises:
in response to a trigger operation acting on the first switching control, switching the first video to a second video corresponding to the first switching control; or,
in response to a trigger operation acting on the second switching control, switching the first video to a second video corresponding to the second switching control.

5. The video playing method according to claim 1, further comprising:
in response to a second switching operation triggered on the first video, switching the first video to a third video, and playing the third video, wherein background music in the third video is the first background music.

6. The video playing method according to claim 5, wherein, in response to a second switching operation triggered on the first video, switching the first video to the third video, comprises:
in response to a swipe operation of a third preset direction triggered on the first video, switching the first video to a third video corresponding to the third preset direction; or,
in response to a swipe operation of a fourth preset direction triggered on the first video, switching the first video to a third video corresponding to the fourth preset direction.

7. The video playing method according to claim 6, wherein the swipe operation of the third preset direction is a swipe operation pointing upwards, and the swipe operation of the fourth preset direction is a swipe operation pointing downwards; or,
the swipe operation of the third preset direction is a swipe operation pointing downwards, and the swipe operation of the fourth preset direction is a swipe operation pointing upwards.

8. The video playing method according to claim 1, wherein a playing page of the first video comprises a playlist control;
the method further comprises:
presenting a playlist in response to a trigger operation on the playlist control, wherein each music in the playlist is similar music that matches the reference music in a preset music dimension.

9. The video playing method according to claim 8, wherein presenting the playlist, comprises:
presenting the first background music in the playlist based on a first display mode;
presenting other music in the playlist based on a second display mode different from the first display mode, wherein the other music in the playlist is remaining music in the playlist except the first background music.

10. The video playing method according to claim 1, wherein the preset music dimension comprises a music using way dimension, a music style dimension, or a music creator dimension.

11. The video playing method according to claim 1, before playing the first video, further comprising:
acquiring a plurality of candidate music;
based on a preset music dimension, matching the reference music with each candidate music to obtain a matching result, and based on the matching result, determining similar music corresponding to the reference music from the plurality of candidate music;
based on the similar music that is determined, determining the first video.

12. The video playing method according to claim 11, wherein when the preset music dimension is a music using way dimension, based on the preset music dimension, matching the reference music with each candidate music to obtain the matching result, and based on the matching result, determining the similar music corresponding to the reference music from the plurality of candidate music, comprises:
acquiring a first to-be-selected video with the reference music as background music, and a second to-be-selected video with each candidate music as background music;
based on video feature information of the first to-be-selected video corresponding to the reference music, determining first video feature information corresponding to the reference music;
based on video feature information of the second to-be-selected video corresponding to each candidate music, determining second video feature information corresponding to each candidate music;
determining a music similarity between the reference music and each candidate music based on the first video feature information and the second video feature information;
determining the similar music corresponding to the reference music from the plurality of candidate music based on the music similarity.

13. The video playing method according to claim 12, wherein a plurality of first to-be-selected videos are provided, and based on the video feature information of the first to-be-selected video corresponding to the reference music, determining the first video feature information corresponding to the reference music, comprises:
based on the video playing count information of each first to-be-selected video corresponding to the reference music, screening the plurality of first to-be-selected videos to obtain a preset number of third to-be-selected videos that are screened out;
performing average processing on video feature information corresponding to the preset number of third to-be-selected videos, to obtain the first video feature information corresponding to the reference music.

14. The video playing method according to claim 12, wherein obtaining the plurality of candidate music, comprises:
based on a music playback count corresponding to each music in a music library, screening out a plurality of to-be-selected music from the music library;
based on music playing information corresponding to each to-be-selected music, determining candidate music having a common using way from the plurality of to-be-selected music.

15. The video playing method according to claim 14, wherein, based on the music playing information corresponding to each to-be-selected music, determining the candidate music having the common using way from the plurality of to-be-selected music, comprises:
acquiring video watching count corresponding to a music page of each to-be-selected music;
determining a target playing proportion corresponding to each to-be-selected music according to a target playback count and a total playback count corresponding to each to-be-selected music, wherein the target playback count refers to a number of playing times of playing the to-be-selected music through the music page corresponding to the to-be-selected music;
determining a target contribution proportion corresponding to each to-be-selected music according to a target contribution quantity and a total contribution quantity corresponding to each to-be-selected music, wherein the target contribution quantity is a quantity of music contributions to the to-be-selected music by a preset music using way;
determining a piece of to-be-selected music is the candidate music having the common using way when the video watching count corresponding to the piece of to-be-selected music is greater than a preset watching count, the target playing proportion corresponding to the piece of to-be-selected music is greater than a preset playing proportion, and the target contribution proportion corresponding to the piece of to-be-selected music is greater than a preset contribution proportion.

16. The video playing method according to claim 11, wherein determining the first video based on the similar music that is determined, comprises:
ranking all similar music that is determined to obtain a similar music sequence;
acquiring first music in the similar music sequence, and determining at least one first candidate video with the first music as background music;
determining the first video from the at least one first candidate video according to video playing information corresponding to each first candidate video.

17. The video playing method according to claim 16, before switching the first video to the second video, further comprising:
determining second music in the similar music sequence according to a sequence position of the first background music in the similar music sequence and the first switching operation, and determining at least one second candidate video with the second music as background music;
determining a second video from the at least one second candidate video according to video playing information corresponding to each second candidate video.

18. A video playing apparatus, comprising:
a first video playing module, configured to play a first video, wherein first background music in the first video is similar music matching with reference music in a preset music dimension;
a second video playing module, configured to switch the first video to a second video in response to a first switching operation triggered on the first video, and play the second video, wherein second background music in the second video is similar music that matches the reference music in a preset music dimension and is different from the first background music.

19. An electronic device comprising:
at least one processor;
a storage apparatus configured to store at least one program,
the at least one program, when executed by the at least one processor, causes the at least one processor to implement the video playing method according to any one of claims 1-17.

20. A storage medium comprising computer-executable instructions for performing the video playing method according to any one of claims 1-17 when executed by a computer processor.
